# EUROPÄISCHE PATENTSCHRIFT

(11) **EP 3 939 468 B1**
(45) Veröffentlichungstag und Bekanntmachung des Hinweises auf die Patenterteilung: **08.04.2026**
(21) Anmeldenummer: 21181996.6
(22) Anmeldetag: 28.06.2021
(51) Int. Cl.: A45C 13/02, A45F 3/04, B62B 3/14, A45C 3/04

(54) **RUCKSACK ZUM TRANSPORT VON LEICHTEN UND SCHWEREN WAREN**
BACKPACK FOR TRANSPORTING LIGHT AND HEAVY ARTICLES
SAC À DOS POUR TRANSPORTER DES ARTICLES LÉGERS ET LOURDS

(30) Priorität: 14.07.2020 CH 8592020
(43) Veröffentlichungstag der Anmeldung: 19.01.2022
(73) Patentinhaber: Fasimik GmbH, 5033 Buchs (CH)
(72) Erfinder: Kradolfer, Michael, 5033 Buchs (CH)
(74) Vertreter: Hepp Wenger Ryffel AG

(56) Entgegenhaltungen:
- EP-A1- 0 612 489
- BR-U2- MU8 701 915
- CN-U- 207 202 439
- FR-A1- 2 902 983
- US-A1- 2012 267 411
- US-A1- 2020 077 772
- US-B1- 6 619 519

## Beschreibung

Die vorliegende Erfindung betrifft einen Rucksack zum Transport von leichten und schweren Gegenständen.

Für einen Haushalt werden bei einem Wocheneinkauf häufig eine Vielzahl von Waren benötigt, welche sich in ihrem Gewicht und in ihrer Zerbrechlichkeit unterscheiden. Damit die fragile Waren wie Salate, Beeren oder Pommes Chips nicht durch darauf liegenden schweren Waren wie Melonen oder Milchflaschen zerdrückt werden, ist es nötig, diese zerbrechlichen Waren oberhalb der schweren Gegenstände in einer Einkaufstasche oder einem Rucksack zu transportieren.

Die Verwendung von Handscannern von den Käufern erlaubt es, die Waren bereits beim Einkaufen in den Einkaufstaschen oder im Rucksack zu verstauen und so eine signifikante Zeiteinsparung zu erzielen. Da sich die schweren Waren und die zerbrechlichen Waren im Laden abwechseln, ist es somit nötig, die Waren in den Einkaufstaschen immer wieder neu in den Einkaufstaschen zu sortieren.

Es sind aus dem Stand der Technik verschiedene Einkaufstaschen und Rucksäcke bekannt. Aus DE12014000157 ist beispielsweise eine Tragetasche oder ein Rucksack bekannt, der einen steifen Aufbewahrungsbehälter umfasst, welcher zerbrechliche Gegenstände schützt. Diese Tasche hat den Nachteil eines komplexen Aufbaus, da ein zusätzlicher Behälter eingesetzt werden muss. Weiter weist die Tasche eine zusätzliche Öffnung auf, durch die auf den Behälter zugegriffen werden kann. Es ist daher schwierig, die Waren einzusortieren. Zudem ist die Tasche schwieriger aufzubewahren, da sie nicht gefaltet oder gerollt werden kann, da der Behälter steif ist und somit immer viel Platz benötigt.

Die Dokumente US 2020/077772 A1, FR 2 902 983 A1, BR MU8 701 915 U2 und CN 207 202 439 U zeigen bereits Taschen bzw. Rucksäcke mit Unterteilungen.

Es ist somit Aufgabe der Erfindung, die Nachteile des Standes der Technik zu beheben und einen Rucksack bereitzustellen, der eine einfache und sichere Beladung mit Waren unterschiedlicher Fragilität und Gewichts ermöglicht, sowie einfach zu verstauen ist.

Die Aufgabe wird gelöst durch einen Rucksack zum Transport von leichten und schweren Waren nach dem unabhängigen Anspruch 1. Der erfindungsgemäße Rucksack umfasst einen Körper zur Aufnahme von Gegenständen und mindestens einen Trageriemen zum Tragen des Rucksacks auf den Schultern. Der Körper umfasst
- eine Oberseite, welche in einer Trageposition oben angeordnet ist,
- eine Unterseite gegenüber der Oberseite,
- zwei Flankenseiten, welche die Oberseite und die Unterseite des Körpers verbinden und gegenüberliegend zueinander angeordnet sind,
- eine Rückenseite, welche die Flankenseiten, die Ober- und die Unterseite verbindet und in der Trageposition am Rücken eines Träger angeordnet ist und
- eine Aussenseite gegenüber der Rückenseite, welche insbesondere als ein Deckel ausgebildet ist, der die Beladeöffnung zur Beladung des Rucksacks verschliesst.

Der Trageriemen ist jeweils an wenigstens zwei Stellen mit dem Körper verbunden, so dass die Rückenseite des Körpers in einer Trageposition an dem Rücken oder seitlich am Rücken eines Trägers aufliegen kann. Der Körper umfasst mindestens zwei Trennelemente, welche das Innere des Körpers in verschiedene Aufnahmebereiche unterteilen, so dass in der Trageposition die Aufnahmebereiche im Wesentlichen übereinander angeordnet sind. Der Körper und die Trennelemente sind aus flexiblem, nicht-selbsttragendem, Material, wie Textil, Blache, Kunststoff, Schaumstoff oder ähnlichem. Das Rückenteil kann zur Verbesserung des Tragekomforts teilweise oder ganz versteift und mit ergonomischen Elementen wie Netzen oder Polstern ausgestattet sein.

Flexibel bedeutet hier, dass das Material gerollt oder gefaltet werden kann. Das Material kann wasserabweisend sein, so dass ausgelaufene Milch oder Joghurt einfach entfernt werden kann.

Ein solcher Rucksack erlaubt es, die schweren und die zerbrechlichen Waren optimal zu verstauen und gleichzeitig den Rucksack selbst gut zu transportieren und aufzubewahren, beispielsweise indem der Rucksack zusammengerollt wird oder zusammengefaltet wird. Der Rucksack kann eine Aufbewahrungstasche umfassen, in die der Rucksack hineingefaltet oder gerollt werden kann. Der Rucksack kann Haken oder Ösen zum Befestigen von Schlüsseln, Regenschirmen oder sonstigen Gegenständen umfassen. Der Rucksack kann Riemen zum Stabilisieren des Rucksacks umfassen. Die Riemen können so angeordnet sein, dass sie in der Trageposition waagrecht und/oder senkrecht um den Umfang des Rucksacks herumführen. Sie können Schnallen, Klickverbindungselemente oder sonstige verbindende Elemente umfassen, mit denen die Riemen festgezurrt werden können. Somit kann der Rucksack stabiler werden. Die Trageriemen können verstellbar ausgebildet sein. Es können Griffe an verschiedenen Seiten angeordnet sein, um ein Anheben, Drehen oder Aufrichten des Rucksacks zu erleichtern. Die Trageriemen können bevorzugt an der Rückenseite im Bereich der Oberseite und an der Rückenseite im Bereich der Unterseite angeordnet sein.

An den Flankenseiten und/oder der Oberseite kann eine Öffnungsvorrichtung ausgebildet sein, bevorzugt ein Reissverschluss, der sich über alle drei Seiten erstreckt.

Der Reisverschluss kann näher an der Rückenseite als an der Aussenseite angeordnet sein. Somit lässt sich das Rückenteil als Öffnungselemente öffnen und in einer Beladeposition, in der die Aussenseite unten angeordnet ist, der Rucksack leicht beladen.

Der Rucksack kann derart ausgebildet sein, dass alle Aufnahmebereiche durch die Beladeöffnung zugänglich sind. So wird ein einfaches, gleichzeitiges Beladen des Rucksacks mit schweren und zerbrechlichen Waren möglich.

Der Rucksack kann Befestigungselemente zum Aufspannen des Rucksacks in der Beladeposition umfassen. Bevorzugt umfasst der Rucksack Haken, welche insbesondere an den Flankenseiten angeordnet sind. Das ermöglicht ein Aufspannen des Rucksackes durch Befestigung am Einkaufswagen, so dass die Beladeöffnung offen gehalten wird. So wird ein einfacheres Beladen möglich.

Der Rucksack kann mindestens eine Flankentasche auf einer Flankenseite umfassen, welche bevorzugt über der ganze Flankenseitenlänge angeordnet ist.

Das erlaubt es, einfach längere Gegenstände wie Baguettebrote, Lauche oder Staubwedel einzupacken.

Der Rucksack kann einen Isolationsbereich zum Transport von temperaturempfindlichen Speisen umfassen, wobei der Isolationsbereich bevorzugt in der Flankentasche und/oder in den Aufnahmebereichen angeordnet ist.

Der Isolationsbereich kann ebenfalls Trennelemente zum Unterteilen des Isolationsbereichs in Trennbereiche umfassen, so dass die Trennbereiche in einer Trageposition übereinander angeordnet sind.

So können auch gekühlte und tiefgekühlte Waren dem Gewicht entsprechend einsortiert werden. Bevorzugt sind auch die Trennbereiche des Isolationsbereichs durch die Beladeöffnung erreichbar.

Der Rucksack kann eine Höhe zwischen 400mm und 750mm und eine Breite zwischen 300-550mm aufweisen, insbesondere bei einer Tiefe zwischen 150-300mm.

Als Höhe des Rucksacks wird hier der Abstand zwischen der Oberseite und der Unterseite verstanden, als Breite der Abstand zwischen den Flankenseiten und als Tiefe der Abstand zwischen der Rückenseite und der Aussenseite.

Rucksäcke der grösseren Grösse erlauben es, den Wocheneinkauf einer durchschnittlichen Familie unterzubringen. Die kleineren Dimensionen sind für einen Einkauf für eine Person ausreichend.

Die Aufnahmebereiche können eine Höhe zwischen 100mm-300mm aufweisen.

Diese Grösse erlaubt es, die üblichen Einkaufswaren wie Brote, Milch oder Teigwaren unterbringen zu können ohne diese zu zerquetschen.

Der Rucksack kann auf der Rückenseite Polster aufweisen, um den Rücken vor harten Kanten zu schützen.

Der Rucksack kann beispielsweise aus Leder, Stoff, Kunststoff oder Kombinationen dieser Materialien gefertigt sein.

Der Rucksack kann Stabilisierungselementen umfassen, die beispielsweise zwischen Rückenseite und Beladeseite angeordnet sind. Durch diese Elemente kann der Rucksack im Einkaufswagen liegend ohne Haken hingestellt werden. Die Stabilisierungselemente können Stäbe oder scharnierartige Elemente sein, die dem Rucksack eine Standfestigkeit geben. Die Elemente können aus Kunststoff oder Metall hergestellt sein.

Die Erfindung wird anhand der nachfolgenden Figuren beispielhaft erklärt. Es zeigt
Figur 1: Draufsicht auf einen Rucksack in einer möglichen Beladeposition,
Figur 2: Seitenansicht auf den Rucksack in der Trageposition.

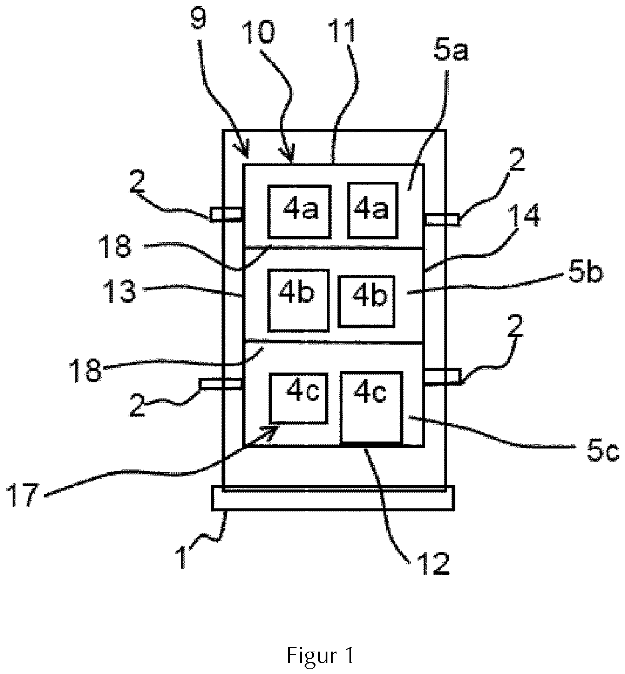

Figur 1 zeigt die Draufsicht auf einen Rucksack 9 in der Beladeposition. Der Rucksack 9 umfasst einen Körper 10.

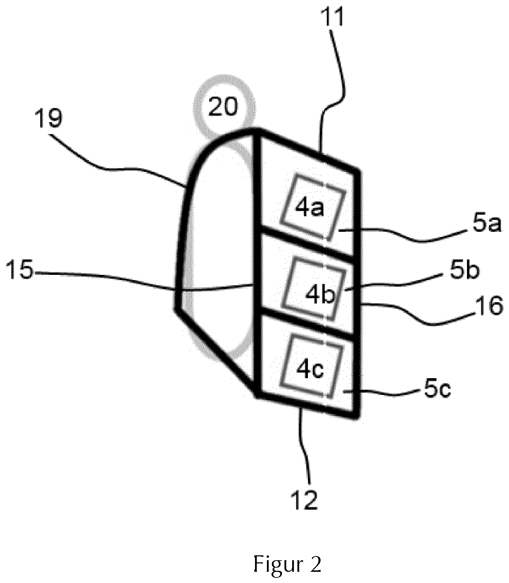

Der Körper 9 umfasst eine Oberseite 11, welche in der Trageposition oben angeordnet ist (vgl. Figur 2), eine Unterseite 12, welche gegenüber der Oberseite 11 angeordnet ist und zwei Flankenseiten 13 und 14, welche die Oberseite 11 und die Unterseite 12 miteinander verbinden.

Der Körper 10 des Rucksacks 9 ist in der Figur 1 als in einem Einkaufswagen 1 mittels vier Haken 2 aufgespannt dargestellt. Zu sehen ist die Beladeöffnung 17, durch die der Käufer Zugriff auf das Innere des Körpers 10 erlangt. Das Innere des Körpers 10 ist mittels zweier Trennelemente 18 in drei Aufnahmebereiche 5a-5c unterteilt. Durch die Beladeöffnung 17 kann auf alle Aufnahmebereiche 5a-5c zugegriffen werden.

Die Aufnahmebereiche 5a-5c sind in der Beladeposition nebeneinander angeordnet. Der erste Aufnahmebereich 5a ist an der Oberseite 11 angeordnet. Hier werden leichte und zerbrechliche Waren 4a wie Chipstüten, Beeren oder Salate geladen. Daneben ist der zweite Aufnahmebereich 5b angeordnet, in dem weniger zerbrechliche und mittelschwere Waren 4b wie Joghurt oder Teigwaren geladen sind. Neben dem zweiten Aufnahmebereich 5b ist der dritte Aufnahmebereich 5c angeordnet, in welchem die schwerste und am wenigsten zerbrechliche Ware 4c wie Wassermelonen oder Milchflaschen geladen sind.

Der Rucksack 9 hat einen Höhenabstand zwischen der Oberseite 11 und der Unterseite 12 von 650mm und einen Breitenabstand zwischen den Flankenseiten 13 und 14 von 450mm.

Figur 2 zeigt eine Seitenansicht eines Rucksacks 9 mit ausgeblendeter Flankenseite 13 (vgl. Figur 1). Der Rucksack 9 wird hier in einer Trageposition gezeigt, in der der Rucksack 9 von einem Träger 20 getragen wird. Dabei liegt eine Rückenseite 15 am Rücken des Trägers 20, die Trageriemen 19 sind über die Schultern des Trägers 20 geschlungen (hier nur ein Trageriemen 19 gezeigt). Die Rückenseite 15 verbindet die Flankenseiten 13 und 14 mit der Oberseite 11 und der Unterseite 12 (vgl. auch Figur 1). Gegenüber der Rückenseite 15 liegt die Aussenseite 16. Die Aussenseite 16 ist als ein Deckel ausgebildet, der die Beladeöffnung 17 (vgl. Figur 1) bedeckt. Der Deckel kann mittels Reiss- oder Klettverschluss verschlossen werden.

Der Rucksack 9 hat einen Tiefenabstand zwischen der Rückenseite 15 und der Beladeseite 16 von 250mm.

Der Aufnahmebereich 5c mit der schweren Ware 4c ist unten angeordnet.

Der Rucksack 9 wird zum Beladen in einen Einkaufswagen gestellt oder mittels der Haken 2 aufgespannt, die Rückenseite 15 wird geöffnet, so dass auf die Aufnahmebereiche 5a-5c zugegriffen werden kann (vgl. Figur 1). Der Käufer belädt den Rucksack 9 durch die Beladeöffnung 17, in dem er schwere Gegenstände in den Aufnahmebereich 5c legt, der in der Trageposition unten angeordnet wird und die zerbrechliche Ware in den oberen Aufnahmebereich 5a. Danach wird die Rückenseite 15 geschlossen und die Trageriemen 18 werden über die Schultern des Trägers geschlungen, so dass sich die Rückenseite 15 am Rücken des Trägers befindet und die Oberseite 11 oben liegt. Somit ist der Rucksack 9 in der Trageposition (vgl. Figur 2).

## Patentansprüche

1. Rucksack (9) zum Transport von leichten und schweren Waren, umfassend einen Körper (10) zur Aufnahme von Gegenständen und mindestens einen Trageriemen (19) zum Tragen des Rucksacks (9) auf den Schultern eines Trägers, der Körper (10) umfasst
- eine Oberseite (11), welche in einer Trageposition oben angeordnet ist,
- eine Unterseite (12) gegenüber der Oberseite (11),
- zwei Flankenseiten (13; 14), welche die Oberseite (11) und die Unterseite (12) des Körpers(10) verbinden und gegenüberliegend zueinander angeordnet sind,
- eine Rückenseite (15), welche die Flankenseiten (13;14), die Oberseite (11) und die Unterseite (12) verbindet und in der Trageposition am Rücken des Träger angeordnet ist und
- eine Aussenseite (16) gegenüber der Rückenseite (15), welche insbesondere als ein Deckel ausgebildet ist, der die Beladeöffnung (17) zur Beladung des Rucksacks (9) verschliesst,
wobei der Trageriemen (19) jeweils an wenigstens zwei Stellen mit dem Körper (10) verbunden ist, so dass die Rückenseite (15) des Körpers (10) in einer Trageposition an dem Rücken eines Trägers aufliegen kann, wobei
der Körper (10) mindestens zwei Trennelemente (18) umfasst, welche das Innere des Körpers (10) in verschiedene Aufnahmebereiche (5a-5c) unterteilen, so dass in der Trageposition die Aufnahmebereiche (5a-5c) im Wesentlichen übereinander angeordnet sind und der Körper (10) und die Trennelemente (18) aus flexiblem, nichtselbsttragendem, Material sind.

2. Rucksack (9) nach Anspruch 1, wobei alle Aufnahmebereiche (5a-5c) durch die Beladeöffnung (17) zugänglich sind.

3. Rucksack (9) nach Anspruch 1 oder 2, wobei der Rucksack (9) Befestigungselemente 2) zum Aufspannen des Rucksacks (9) in der Beladeposition umfasst, bevorzugt Haken, welche insbesondere an den Flankenseiten (13;14) angeordnet sind.

4. Rucksack (9) nach einem der vorhergehenden Ansprüche, wobei der Rucksack (9) mindestens eine Flankentasche auf einer Flankenseite (13;14) umfasst, welche bevorzugt über der ganze Flankenseitenlänge angeordnet ist.

5. Rucksack (9) nach einem der vorhergehenden Ansprüche, wobei der Rucksack (9) einen Isolationsbereich zum Transport von temperaturempfindlichen Waren umfasst, wobei der Isolationsbereich bevorzugt in der Flankentasche oder den Aufnahmebereichen angeordnet ist.

6. Rucksack (9) nach Anspruch 5, wobei der Isolationsbereich ebenfalls Trennelemente zum Unterteilen des Isolationsbereichs in Trennbereiche umfasst, so dass die Trennbereiche in einer Trageposition übereinander angeordnet sind.

7. Rucksack (9) nach einem der vorhergehenden Ansprüche, wobei der Rucksack (9) eine Höhe zwischen 400mm und 750mm und eine Breite zwischen 300-550mm aufweist, insbesondere bei einer Tiefe zwischen 150-300mm.

8. Rucksack (9) nach einem der vorhergehenden Ansprüche, wobei die Aufnahmebereiche (5a-5c) eine Höhe zwischen 100mm-300mm aufweist.

## Claims

1. Backpack (9) for transporting light and heavy goods, comprising a body (10) for receiving objects and at least one shoulder strap (19) for carrying the backpack (9) on the shoulders of a wearer, the body (10) comprises
- a top side (11), which is arranged at the top in a carrying position,
- a bottom side (12) opposite the top side (11),
- two flank sides (13; 14), which connect the top side (11) and the bottom side (12) of the body (10) and are arranged opposite one another,
- a back side (15), which connects the flank sides (13; 14), the top side (11) and the bottom side (12) and is arranged at the back of the wearer in the carrying position, and
- an outside (16) opposite the back side (15), which is in particular configured as a lid that closes the loading opening (17) for loading the backpack (9),
wherein the shoulder strap (19) is connected to the body (10) at at least two points, so that the back side (15) of the body (10) can rest against the back of a wearer in a carrying position,
wherein the body (10) comprises at least two separating elements (18), which divide the interior of the body (10) into different receiving areas (5a-5c), so that in the carrying position the receiving areas (5a-5c) are arranged substantially one above the other and the body (10) and the separating elements (18) are of flexible, non-self-supporting, material.

2. Backpack (9) according to claim 1, wherein all receiving areas (5a-5c) are accessible through the loading opening (17).

3. Backpack (9) according to claim 1 or 2, wherein the backpack (9) comprises fastening elements 2) for tensioning the backpack (9) in the loading position, preferably hooks, which are in particular arranged on the flank sides (13; 14).

4. Backpack (9) according to one of the preceding claims,
wherein the backpack (9) comprises at least one flank pocket on a flank side (13; 14), which is preferably arranged over the entire length of the flank side.

5. Backpack (9) according to one of the preceding claims,
wherein the backpack (9) comprises an insulation area for transporting temperature-sensitive goods, wherein the insulation area is preferably arranged in the flank pocket or the receiving areas.

6. Backpack (9) according to claim 5, wherein the insulation area also comprises separating elements for dividing the insulation area into separate areas, so that the separate areas are arranged one above the other in a carrying position.

7. Backpack (9) according to one of the preceding claims,
wherein the backpack (9) has a height between 400 mm and 750 mm and a width between 300 mm and 550 mm, in particular with a depth between 150 mm and 300 mm.

8. Backpack (9) according to one of the preceding claims,
wherein the receiving areas (5a-5c) have a height between 100 mm and 300 mm.

## Revendications

1. Sac à dos (9) pour le transport de marchandises légères et lourdes, comprenant un corps (10) pour la réception d'objets et au moins une bretelle (19) pour le portage du sac à dos (9) sur les épaules d'un porteur, le corps (10) comprend
- un côté supérieur (11), qui dans une position de portage est agencé en haut,
- un côté inférieur (12) à l'opposé du côté supérieur (11),
- deux côtés de flanc (13; 14), qui relient le côté supérieur (11) et le côté inférieur (12) du corps (10) et sont agencés à l'opposé l'un de l'autre,
- un côté dorsal (15), qui relie les côtés de flanc (13; 14), le côté supérieur (11) et le côté inférieur (12) et est agencé dans la position de portage au niveau du dos du porteur, et
- un côté extérieur (16) à l'opposé du côté dorsal (15), qui est en particulier configuré comme un couvercle qui ferme l'ouverture de chargement (17) pour le chargement du sac à dos (9),
la bretelle (19) étant reliée en au moins deux endroits au corps (10), de sorte que le côté dorsal (15) du corps (10) peut reposer, dans une position de portage, contre le dos d'un porteur,
le corps (10) comprenant au moins deux éléments de séparation (18), qui subdivisent l'intérieur du corps (10) en différentes zones de réception (5a-5c), de sorte que dans la position de portage, les zones de réception (5a-5c) sont agencées sensiblement les unes au-dessus des autres et le corps (10) et les éléments de séparation (18) sont en un matériau flexible, non autoportant.

2. Sac à dos (9) selon la revendication 1, dans lequel toutes les zones de réception (5a-5c) sont accessibles par l'ouverture de chargement (17).

3. Sac à dos (9) selon la revendication 1 ou 2, dans lequel le sac à dos (9) comprend des éléments de fixation 2) pour tendre le sac à dos (9) dans la position de chargement, de préférence des crochets, qui sont en particulier agencés sur les côtés de flanc (13; 14).

4. Sac à dos (9) selon l'une des revendications précédentes, dans lequel le sac à dos (9) comprend au moins une poche de flanc sur un côté de flanc (13; 14), laquelle est de préférence agencée sur toute la longueur du côté de flanc.

5. Sac à dos (9) selon l'une des revendications précédentes, dans lequel le sac à dos (9) comprend une zone d'isolation pour le transport de marchandises sensibles à la température, la zone d'isolation étant de préférence agencée dans la poche de flanc ou les zones de réception.

6. Sac à dos (9) selon la revendication 5, dans lequel la zone d'isolation comprend également des éléments de séparation pour subdiviser la zone d'isolation en zones de séparation, de sorte que les zones de séparation sont agencées les unes au-dessus des autres dans une position de portage.

7. Sac à dos (9) selon l'une des revendications précédentes, dans lequel le sac à dos (9) présente une hauteur comprise entre 400 mm et 750 mm et une largeur comprise entre 300 mm et 550 mm, en particulier avec une profondeur comprise entre 150 mm et 300 mm.

8. Sac à dos (9) selon l'une des revendications précédentes, dans lequel les zones de réception (5a-5c) présentent une hauteur comprise entre 100 mm et 300 mm.
